# EUROPÄISCHE PATENTANMELDUNG

(11) **EP 1 777 659 A1**
(43) Veröffentlichungstag der Anmeldung: **25.04.2007**
(21) Anmeldenummer: 05022831.1
(22) Anmeldetag: 20.10.2005
(51) Int. Cl.: G07B 15/00, G07F 7/08

(54) **Elektronisches Endgerät mit integriertem elektronischen Ausweis**

(71) Anmelder: Scheidt & Bachmann Gesellschaft mit beschränkter Haftung, 41238 Mönchengladbach (DE)
(72) Erfinder: Miller, Dr. Norbert, 41063 Mönchengladbach (DE); Augustyniak, Matthias, 41065 Mönchengladbach (DE)
(74) Vertreter: Stenger, Watzke & Ring

(57) **Zusammenfassung**

Elektronisches Endgerät mit integriertem elektronischen Ausweis, wobei der elektronische Ausweis zumindest eine Speichereinheit, eine Empfangseinheit und eine Verarbeitungseinheit aufweist, die derart eingerichtet sind, daß eine Abrechnung einer in Anspruch genommenen Dienstleistung basierend auf im Sinne einer ausschließlich unidirektionalen Kommunikation an den elektronischen Ausweis übermittelten Datentelegrammen durchführbar ist, wobei die Datentelegramme von der Empfangseinheit empfangbar, von der Verarbeitungseinheit verarbeitbar und von der Speichereinheit speicherbar sind.

## Beschreibung

Die vorliegende Erfindung bezieht sich auf ein elektronisches Endgerät mit integriertem elektronischen Ausweis zur Abrechnung einer in Anspruch genommenen Dienstleistung, insbesondere zur Abrechnung von sogenannten Tickets.

Der Begriff "Ticket" wird vorliegend als Oberbegriff für Zugangsberechtigungen und Fahrkarten verwendet, wie beispielsweise Konzertkarten, Parkhausscheine, Kinokarten, Bus- und Bahnfahrkarten, Flugtickets oder dergleichen. Nachfolgend wird der Einfachheit halber allerdings nur auf Fahrkarten Bezug genommen, was jedoch nicht einschränkend zu verstehen ist.

Derartige Tickets werden heutzutage überwiegend in Papierform verwendet und können an Schaltern, Automaten oder dergleichen gekauft werden. Die relevanten Daten sind normalerweise auf das Ticket gedruckt. Ein wesentlicher Vorteil solcher Papiertickets besteht darin, daß die aufgedruckten Informationen von jedermann gelesen und somit auch einfach kontrolliert werden können. Nachteilig ist hingegen ihre eher umständliche Handhabung. Auch können Papiertickets relativ einfach gefälscht werden. Aufgrund dieser Nachteile werden sie immer häufiger durch sogenannte "elektronische Ausweise" ersetzt, auf denen Tickets speicherbar sind.

Elektronische Ausweise ermöglichen vorteilhaft eine automatische Ermittlung und Abrechnung des Fahrpreises. Sie umfassen dazu ein auslesbares Speichermedium, auf dem Informationen in digitaler Form abgelegt werden können.

Beispielsweise sind sogenannten Smartcards bekannt, die als kontaktbehaftete Karten (klassische Chipkarten), als kontaktlose Karten (Transponderkarten) oder auch als Mischformen (Dual-Interface-Karten) bereitgestellt werden können. Die Verarbeitung solcher Smartcards im Rahmen der Fahrpreiserhebung (Schreib-Lesevorgänge an Automaten, Durchgangssperren, Kontrollgeräten, personenbesetzten Verkaufsstellen und anderen Stellen des öffentlichen Personenverkehrs) erfolgt über eine entsprechende technische "Ticketing-Infrastruktur" der jeweiligen Verkehrsbetriebe, die sehr aufwendig und teuer ist. Zudem kommt es zu einem erheblichen Aufkommen an Kommunikationssignalen in unmittelbarer Nähe der Geräte, welche ihrerseits wiederum mit Zentraleinheiten zu Zwecken der Tarifgestaltung, Nutzungsauswertung und dergleichen in Verbindung stehen müssen.

Auch sind elektronische Ausweise bekannt, die in elektronischen Endgeräten, wie beispielsweise in Mobiltelefonen, integriert sind.

Der Rhein-Main-Verkehrsverbund betreibt zum Beispiel in Hanau probeweise ein so genanntes "Check-In/Check-Out"-System, bei dem sich der Fahrgast mit Hilfe eines elektronischen Ausweises in Form einer Chipkarte beim Ein- und Aussteigen an einem Terminal im Fahrzeug identifiziert. Zum Identifizieren ist ein Auslesen der auf der Chipkarte gespeicherten Daten erforderlich, was mittels einer bidirektionalen Kommunikation zwischen der Chipkarte und dem Terminal erfolgt. Ein Hintergrundsystem errechnet anhand dieser ausgelesenen Daten, welche Strecken der Kunde tatsächlich gefahren ist und bucht die ermittelten Fahrpreise auf ein mit der Chipkarte verknüpftes Konto.

Check-In/Check-Out Systeme haben den Nachteil, daß sie für Massenanwendungen in der Regel nicht geeignet sind: man stelle sich eine volle U-Bahn zur Hauptverkehrszeit vor, bei der jeder Fahrgast beim oder kurz vor dem Erreichen der Ziel-Haltestelle zunächst an ein Terminal in der U-Bahn herantreten muss, um einen Check-Out vorzunehmen. Dies ist faktisch nur in geschlossenen Systeme mit Drehgittern an jeder Haltestelle praktikabel, wie beispielsweise in der Londoner U-Bahn. Für offene Systeme, wie sie zum Beispiel in Deutschland üblich sind, ist dies eher unpraktisch. Für Inhaber von Monatskarten erweist sich zudem der zusätzliche Aufwand für Check-In und Check-Out als Verschlechterung zum Fahrschein auf Papier.

Aus der PCT-Anmeldung NL01/00215 ist ein sogenanntes "Be-In/Be-Out"-System bekannt, bei dem der Fahrgast ein elektronisches Endgerät, wie beispielsweise ein Mobiltelefon oder einen Transponder, mit integriertem elektronischen Ausweis verwendet. Das elektronische Endgerät ist dem Fahrgast mittels einer Nummer zugeordnet, um diesen automatisch zu identifizieren, wenn er sich in einem Fahrzeug des öffentlichen Nahverkehrs aufhält. Das Fahrzeug registriert, wo der Fahrgast das Fahrzeug betritt und wo er es wieder verläßt. In der Regel werden diese Daten an ein Hintergrundsystem übermittelt, das auf diesen basierend den Fahrpreise für die zurückgelegte Strecke ermittelt.

Die DE 109 57 660 beschreibt ein weiteres "Be-In/Be-Out"-System zur Abrechnung des Fahrpreises bei der Benutzung öffentlicher Verkehrsmittel, bei dem ein vom Benutzer mitgeführter scheckkartenähnlicher elektronischer Ausweis mit einer intergrierten Speichereinheit verwendet wird, wobei auf der Speichereinheit ein Guthaben gespeichert ist. Während der Nutzung öffentlicher Verkehrsmittel werden von dem Verkehrsmittel Zählimpulse ausgesandt und von dem elektronischen Ausweis empfangen. Bei jedem empfangenen Zählimpuls wird von dem auf der Speichereinheit abgespeicherten Guthaben ein Betrag abgebucht. Dabei muß die Speichereinheit praktisch ununterbrochen aktiv sein, was den Energieverbrauch des elektronischen Ausweises erheblich erhöht. Darüber hinaus ist die Anpassung an Tarifsysteme, Gruppensysteme und dergleichen praktisch nicht möglich. Schlußendlich ist noch vorgesehen, daß am Fahrzeug eine Erkennungsvorrichtung ausgebildet ist, die Codierungen der einzelnen elektronischen Ausweise erkennt und verwertet, so daß insgesamt eine bidirektionale Kommunikation zwischen dem elektronischen Ausweis und dem Fahrzeug erforderlich ist.

Aus der Schweiz ist ein "Be-In/Be-Out"-Pilotprojekt"easyride" bekannt, bei dem der Kunde einen elektronischen Ausweis in Form einer Transponderkarte bei sich führt, die beim Benutzen eines Fahrzeugs eine Anmeldung im Fahrzeug vornimmt und dies regelmäßig wiederholt. Die Kommunikation zwischen dem Fahrzeug und der Transponderkarte ist dabei ebenfalls bidirektional und nimmt in der Komplexität zu, je mehr Fahrgäste sich im Fahrzeug befinden.

Solche Be-In/Be-Out Systeme sind bisher jedoch sehr teuer und technisch anfällig. Da beim Einsatz solcher Systeme jeder einzelne elektronische Ausweis Daten senden muß, treten bei einem hohen Personenaufkommen aufgrund der Vielzahl gesendeter Daten häufig Probleme auf. Zur Lösung dieser Probleme müßten größere Frequenzbereiche reserviert werden, damit eine große Anzahl Endgeräte störungsfrei senden kann. Dies ist jedoch insbesondere an großen Verkehrsknotenpunkten nicht zu realisieren. Eine weitere Alternative wäre, ein Protokoll zu verwenden, mit dem die Aufsendungen der Endgeräte koordiniert werden. Eine solche Implementierung ist jedoch aufwendig und äußerst fehleranfällig. Außerdem benötigt dabei der im Bereich des Transportmittels angeordnete Sender eine Kommunikationsverbindung zu einer zentralen Rechnereinheit zur Weiterleitung der empfangenen Daten, was ebenfalls mit Aufwand und Kosten verbunden ist. Auch ist ein immer wieder auftretendes Problem der hohe Energiebedarf des Transpondermediums. Aber insbesondere für den Betreiber ist die Kontrolle von Fahrscheinen schwierig. Man kann dem elektronischen Fahrschein nämlich nicht mehr ansehen, ob er für die Fahrtstrecke gültig ist oder nicht. Um den elektronischen Fahrschein auf Gültigkeit zu prüfen, muß der Kontrolleur zunächst den Fahrschein auslesen und dann die Daten mit den Angaben im Hintergrundsystem abgleichen. Selbst optimierte Kontrollgeräte erreichen in der Praxis derzeit eine Kontrollzeit von etwa sechs Sekunden pro Fahrschein. Gerade im Vergleich mit der einfachen und schnellen Kontrollmöglichkeit des Papierfahrscheins erweisen sich solche Systeme in der Praxis als langsam und nicht robust.

Es ist eine Aufgabe der vorliegenden Erfindung, ein elektronisches Endgerät mit integriertem oder adaptiertem elektronischen Ausweis bereitzustellen, der die Durchführung eines Verfahrens zur automatisierten Erfassung der Benutzung kostenpflichtiger Transportmittel und zur Abrechnung des Fahrpreises ermöglicht, der einfach zu handhaben, kundenfreundlich, beständig gegen Betrugsversuche und flexibel bezüglich der Tariffestlegung ist.

Diese Aufgabe wird gemäß der vorliegenden Erfindung durch ein elektronisches Endgerät nach Anspruch 1 gelöst. Die abhängigen Ansprüche beziehen sich auf individuelle Ausgestaltungen des erfindungsgemäßen Endgeräts.

Der in das elektronisches Endgerät gemäß der vorliegenden Erfindung integrierte oder adaptierte elektronische Ausweis umfaßt zumindest eine Speichereinheit, eine Empfangseinheit und eine Verarbeitungseinheit. Die Einheiten sind erfindungsgemäß derart eingerichtet, daß eine Abrechnung einer in Anspruch genommenen Dienstleistung basierend auf im Sinne einer ausschließlich unidirektionalen Kommunikation an den elektronischen übermittelten Datentelegrammen durchführbar ist, wobei die Datentelegramme von der Empfangseinheit empfangbar, von der Verarbeitungseinheit verarbeitbar und von der Speichereinheit speicherbar sind. Die Einrichtung der Einheiten erfolgt bevorzugt über geeignete Hard- und Software.

Unter Einsatz dieses elektronischen Endgerätes kann demnach ein Verfahren zur automatisierten Erfassung der Benutzung kostenpflichtiger Transportmittel und zur Abrechnung des Fahrpreises durchgeführt werden, das auf ausschließlich unidirektional übermittelten Datentelegrammen basiert, was auch als Broadcast-Verfahren bezeichnet wird. Dies hat gegenüber den zuvor beschriebenen Be-In/Be-Out-Systemen den Vorteil, daß Daten lediglich an den elektronischen Ausweis gesendet werden müssen, jedoch keine Daten zurückgesendet werden. Die übermittelten Datenmengen und die damit einhergehenden Probleme können entsprechend wesentlich reduziert werden. Im Vergleich zu Check-In/Check-Out-Systemen erfolgt ferner weder eine An- noch eine Abmeldung, weshalb die Verwendung des erfindungsgemäßen elektronischen Endgeräts und die Durchführung des mit diesem ausführbaren Verfahrens auch in offenen Systemen praktikabel sind.

Das unter Einsatz des erfindungsgemäßen elektronischen Endgeräts mit integriertem oder adaptiertem elektronischen Ausweis durchgeführte Verfahren kann in Kurzfassung beispielsweise wie folgt betrieben werden. Eine Person, die ein solches Endgerät mit sich führt, in deren Speichereinheit ein Guthaben gespeichert ist, steigt in einen Bus ein. In dem Bus ist ein Sender angeordnet, der in regelmäßigen Abständen, beispielsweise kurz nach jeder Haltestelle, ein oder mehrere Datentelegramme aussendet, die abrechnungsrelevante Informationen enthalten, wobei der Sendebereich bevorzugt auf den Innenraum des Busses beschränkt ist. Diese Datentelegramme werden von der Empfangseinheit des elektronischen Ausweises empfangen und auf der Speichereinheit gespeichert. Solange die Person in dem Bus verbleibt, werden also Datentelegramme in der Speichereinheit gespeichert. Die gespeicherten Datentelegramme können dann zu Abrechnungszwecken verwendet werden.

Vorzugsweise umfaßt das elektronische Endgerät eine Informationsausgabeeinheit, wie beispielsweise ein Display oder dergleichen, von dem Informationen abgelesen werden können. Auf diese Weise ist der Betriebszustand des Endgerätes abrufbar, wie zum Beispiel der Ladezustand des Geräts, das derzeitige Guthaben, etc.

Bevorzugt handelt es sich bei dem elektronischen Endgerät gemäß der vorliegenden Erfindung um ein Mobiltelefon, einen Handheld oder dergleichen. Herkömmliche Mobiltelefone und Handhelds sind weit verbreitet und werden regelmäßig erneuert. Sie müssen lediglich nachgerüstet werden, um ein erfindungsgemäßes Endgerät zu erzeugen. Ferner können Komponenten, die in diesen bekannten elektronischen Endgeräten vorhanden sind, für den elektronischen Ausweis direkt genutzt werden. Bei der Verwendung eines Mobiltelefons als erfindungsgemäßes Endgerät ist es beispielsweise nicht erforderlich, eine zusätzliche Empfangseinheit vorzusehen, da ja bereits eine solche vorhanden ist.

Das elektronische Endgerät gemäß der vorliegenden Erfindung umfaßt ferner bevorzugt eine Sendeeinheit, mit der die in der Speichereinheit des Endgeräts gespeicherten empfangenen Daten des Senders zeitversetzt ganz oder teilweise an eine zentrale Rechnereinheit übertragen und dort daraus der zu entrichtende Gesamtpreis ermittelt werden kann, was nachfolgend noch näher erläutert ist.

Die Speichereinheit des elektronischen Ausweises ist bevorzugt derart eingerichtet, daß auf ihr ein vorbezahltes Guthaben speicherbar ist. Die Verarbeitungseinheit ist dabei derart eingerichtet, daß das Guthaben in Abhängigkeit der übermittelten Datentelegramme reduzierbar ist. Vorteilhaft können die empfangenen Datentelegramme in verschiedenen Modi verarbeitetet werden. Die Datentelegramme können beispielsweise sofort nach ihrem Empfang oder erst bei Eintreten eines vorbestimmten Ereignisses abgerechnet werden. Mit anderen Worten kann das in der Speichereinheit gespeicherte Guthaben bei jedem Empfang eines Datentelegramms mittels der Verarbeitungseinheit reduziert werden. Die Datentelegramme können aber alternativ auch über einen vorbestimmten Zeitraum gesammelt werden, so daß Sondertarife berücksichtigt werden können, wie beispielsweise besonders lange Fahrten, Fahrten am Wochenende, mehrere Fahrten innerhalb eines vorbestimmten Zeitraums oder dergleichen. Der gerade aktive Modus ist mittels der Informationsausgabeeinheit vorzugsweise anzeigbar und ist vom Benutzer des erfindungsgemäßen elektronischen Endgeräts bevorzugt wählbar.

In der Speichereinheit sind vorzugsweise zeitlich und/oder räumlich begrenzte Gültigkeitsinformationen speicherbar, die der Benutzer oder auch ein Kontrolleur abrufen kann, um festzustellen, ob das auf dem elektronischen Ausweis gespeicherte Ticket gültig ist.

Ferner ist die Verarbeitungseinheit vorzugsweise derart eingerichtet, daß sie aus den empfangenen Datentelegrammen Datensätze über den Fahrtanfang und/oder das Fahrtende generiert und diese speichert.

Das erfindungsgemäße Endgerät verfügt vorteilhaft über eine zusätzliche Schnittstelle, beispielsweise eine Infrarotschnittstelle, um spezielle Informationen oder Modi abzurufen. So kann beispielsweise ein einfaches Senderfeld im Fahrzeug verwendet werden, um einen Mehrpersonenmodus im Endgerät zu aktivieren, beispielsweise doppelte, dreifache oder mehrfache Abbuchungen oder dergleichen. Hier genügt ein einfaches Anhalten an ein entsprechend gekennzeichnetes Senderdisplay, um per Infrarot die Informationen zu erlangen.

Nachfolgend wird zur näheren Erläuterung des erfindungsgemäßen elektronischen Endgeräts ein Verfahren beschrieben, das mit diesem ausführbar ist:

Ausgangspunkt ist, daß der Fahrgast ein erfindungsgemäßes elektronisches Endgerät besitzt, mit dem er ein öffentliches Verkehrsmittel besteigt. Es wird dann ein Verfahren durchgeführt, bei dem die folgenden Schritte erfolgen:
- Einmaliges Empfangen der vom Fahrzeug gesendeten Daten mittels der Empfangseinheit und Speichern dieser Daten auf der Speichereinheit,
- Empfangen und Speichern weiterer vom Fahrzeug gesendeter Daten,
- Weiterverarbeitung der empfangenen Daten mittels der Verarbeitungseinheit unter Berücksichtigung von auf dem Endgerät befindlichen Daten und Algorithmen,
- in Abhängigkeit vom Ergebnis der Verarbeitung Abbuchen von Wert- oder Geldeinheiten aus der Speichereinheit des erfindungsgemäßen Endgeräts
   und / oder
- in Abhängigkeit vom Ergebnis der Verarbeitung Anzeige tarif- und nutzungsrelevanter Informationen auf der Informationsausgabeeinheit des erfindungsgemäßen Endgeräts.

Das Senden der Daten vom Fahrzeug erfolgt vorzugsweise mit Hilfe eines einfach empfangbaren Funksenders (Transponder, WLAN, Bluetooth oder andere) mit begrenzter Reichweite. Die Sender sind dabei vorzugsweise gegen Störungen unempfindlich; dazu eignen sich insbesondere sog. Frequency-Hopping-Technologien oder ähnliches. Ein Rücklesen des gesendeten Codes ermöglicht die kontinuierliche Funktionskontrolle im Fahrzeug.

Das erfindungsgemäße Endgerät, in welches der elektronische Ausweis integriert oder adaptiert ist, empfängt die vom Sender ausgesendeten Datentelegramme und verarbeitet diese weiter. Diese Weiterverarbeitung kann darauf beschränkt sein, die empfangenen Daten unverändert zu speichern.

Gemäß der Erfindung können im Endgerät nach Auswertung des empfangenen Datentelegramms Einheiten von einem vorbezahlten Guthaben abgebucht werden. Dieses Guthaben kann beispielsweise bei der Übernahme des Endgerätes oder zu jedem beliebigen Zeitpunkt an dafür vorgesehenen Stellen aufgeladen werden. Der zu zahlende Fahrpreis kann beispielsweise linear entfernungsabhängig sein oder sich an einer beliebig anderen Tarifsystematik errechnen.

In einer Ausgestaltungsform enthält das erfindungsgemäße Endgerät zeitlich und/oder räumlich begrenzte Gültigkeitsinformationen, die mit den im empfangenen Datentelegramm enthaltenen Daten verglichen werden. Somit läßt sich eine Zeitkarte realisieren, deren Gültigkeit gleichzeitig auf ein geographisch eingeschränktes Gebiet begrenzt sein kann. Das Ticket kann beispielsweise einen Tag, ein Wochenende, eine Woche, einen Monat oder sogar ein ganzes Jahr gültig sein. Auch beliebige andere Gültigkeitsdauer sind möglich, beispielsweise während Messen oder sonstiger Veranstaltungen oder Ereignisse. Weiterhin kann die Gültigkeit auf eine geographische Region wie beispielsweise eine Stadt oder eine Verkehrszone begrenzt sein. Auch eine Beschränkung auf bestimmte Verkehrsmittel ist möglich. Das Vorhandensein einer Gültigkeitsinformation, welche mit den vom Fahrzeug empfangenen Daten in Übereinstimmung ist (Ticket paßt zur Fahrt) kann auf dem Display zwecks einfacher visueller Kontrolle zur Anzeige gebracht werden.

Gemäß einer weiteren Ausgestaltung umfaßt das elektronische Endgerät gemäß der vorliegenden Erfindung ferner eine Sendeeinheit, mit der die in der Speichereinheit des Endgeräts gespeicherten empfangenen Daten des Senders zeitversetzt ganz oder teilweise an eine zentrale Rechnereinheit übertragen und dort daraus der zu entrichtende Gesamtpreis ermittelt werden kann. Dabei können alle empfangenen Datenpakete an die Rechnereinheit übertragen werden. Es ist auch möglich, daß nur weiterverarbeitete Datensätze, die beispielsweise den Fahrtanfang und das Fahrtende kennzeichnen, an die Rechnereinheit übertragen werden und insofern eine Vorverarbeitung im Endgerät stattfindet. Auch eine Kombination dieser Prinzipien ist möglich. In vorteilhafter Weise kann so auch die in Anspruch genommene Route in die Tarifermittlung einfließen. Das Vorgehen, die tatsächliche Nutzung im Nachhinein abzurechnen, eignet sich besonders für Dauerkunden, deren Daten dem Transportdienstleister bekannt sind. Es bietet sich beispielsweise an, eine Art Abschlag auf dem Endgerät zu speichern, der bei Nutzung sukzessive abgebaut wird. Ist eine gewisse Grenze erreicht, so verliert das auf dem elektronischen Ausweis gespeicherte Ticket seine Gültigkeit, bis das Endgerät zur Übertragung der Daten kommunikationstechnisch mit einer zentralen Rechnereinheit verbunden wird, eine exakte Abrechnung erfolgt und ein erneuter Abschlag auf das Endgerät übertragen wird.

Selbstverständlich können auch weitere Abrechnungsmodi vorgesehen sein, beispielsweise die Verwendung von Einzel- oder Mehrfahrtentickets.

In vorteilhafter Weise zeigt das Endgerät an, welcher Abrechnungsmodus aktiv ist. Dies kann, zusammen mit der Ticketgültigkeit, vom Nutzer wie von einem Kontrolleur überprüft werden.

In vorteilhafter Weise enthalten die vom im Transportmittel angeordneten Sender ausgesendeten Datentelegramme mindestens eine Information aus der Menge Firmen-ID, Sequenznummer, Datum, Uhrzeit, Standortinformation und Fahrzeugidentifikation. Die Firmen-ID dient der Identifikation des die Transportleistung bereitstellenden Unternehmers, wodurch beispielsweise die Aufteilung von Einnahmen auf die verschiedenen Unternehmer in einem Verkehrsverbund ermöglicht wird. Anhand der Sequenznummer kann das Datentelegramm eindeutig identifiziert werden. Mit Hilfe von Datum und Uhrzeit kann der Zeitpunkt der Nutzung des Transportmittels bestimmt werden. Die Standortinformation dient dazu, den räumlichen Verlauf des Transports nachzuvollziehen. Anhand der Fahrzeugidentifikation kann festgestellt werden, welches Transportmittel benutzt wird. Selbstverständlich können die Datentelegramme auch weitere, hier nicht aufgeführte Informationen enthalten.

Diese Informationen bezieht der Sender in vorteilhafter Weise von einem ohnehin im Transportmittel vorhandenen Rechner, zum Beispiel einem RBL-Bordrechner oder einem IBIS-Steuergerät. Die Übertragung kann über einen IBIS-Wagen-Bus, Ethernet LAN oder sonstige Kanäle erfolgen.

Die vom Fahrzeug gesendeten Daten (Code) sind dabei qualifiziert. Je nachdem, welche Art von Tarifmodell unterstützt werden soll, enthält der Code zumindest einen Zählerstand oder eine Ortsinformation. Aus der Veränderung / Fortschreibung des Codes kann die Verarbeitungseinheit (V) ermitteln, welche Strecken bei der Nutzung des Fahrzeugs zurückgelegt wurden und welche Gebühren sich daraus für den Fahrgast ergeben. Steigt der Fahrgast beispielsweise an einer Haltestelle (A) ein, und steht ein Zähler des Fahrzeugs auf 100 kann dieser Zählerstand nunmehr regelmäßig vom Fahrzeug ausgesendet werden, ohne daß dadurch die Verarbeitungseinheit die gespeicherten Wert- oder Geldeinheiten vermindert. Erst wenn das Fahrzeug fährt, wird der Zähler des Fahrzeugs inkrementiert. So kann beispielsweise an der Haltestelle (B) der Zählerstand 103 betragen und an Haltestelle (C) entsprechend 110. Die Verarbeitungseinheit erhält vom Empfänger (E) jeweils die veränderten Codes, aus denen der Zählerstand ermittelt werden kann. Hat sich der Zählerstand verändert, können während der Fahrt entsprechende Wert- oder Geldeinheiten abgebucht und dem Fahrgast auf dem Display ein verbleibendes Kontingent oder Guthaben angezeigt werden.

Weit verbreitet sind jedoch auch Tarife, die einen festgelegten Preis für jede mögliche Wegstrecke von A nach B vorgeben. Und zwar oft in Abhängigkeit von Zonen, Waben oder anderen übergeordneten Verwaltungseinheiten. Bei solchen Tarifmodellen ist es mit dem erfindungsgemäßen Verfahren möglich, Informationen über die aktuelle Haltestelle und gegebenenfalls die aktuelle Zone, Wabe etc. zu senden. Nun kann das erfindungsgemäße Endgerät selbständig z.B. anhand von Tabellen errechnen, welcher Fahrpreis für die bisher zurückgelegte Strecke zu entrichten ist. Diese können im Endgerät enthalten sein oder in einer besonders vorteilhaften Ausführung der Erfindung ebenfalls im gesendeten Code enthalten sein. Die letztgenannte Variante könnte beispielsweise an jeder Haltestelle die bis dahin angefallenen Preise bzw. Preisstufen für alle möglichen Einstiegshaltestellen senden, wovon das Endgerät nur die für seine Einstiegshaltestelle gültige Information auswertet. Abbuchungen des Fahrpreises können dabei jeweils an jeder Haltestelle vorgenommen werden, und zwar als Differenzabbuchung zur Abbuchung an der vorhergehenden Haltestelle. Fährt ein Fahrgast beispielsweise 5 Haltestellen, so ist es denkbar, ihm beim Erreichen der ersten Haltestelle den Preis für eine "Kurzstrecke" abzubuchen und im weiteren Fahrtverlauf erst beim Erreichen der 4. Haltestelle zusätzlich die Differenz zwischen einer "Kurzstrecke" und einer "Einzelfahrt" abzubuchen.

Ein besonderes Problem ergibt sich aus Tarifregelungen wie beispielsweise beim Rhein-Main-Verkehrsverbund oder dem Verkehrsverbund Rhein-Ruhr üblich, daß ein Ticket "nur zu Fahrten in Richtung auf das Ziel" genutzt werden darf. Bei Papierbasierten Fahrscheinen ist der Fahrgast dafür verantwortlich, für die Rückfahrt einen neuen Fahrschein zu kaufen. Ein automatisiertes Fahrscheinsystem muß dies zuverlässig automatisch erledigen. An einem konkreten Beispiel wird das Problem deutlich:

Fährt man im Rhein-Main-Gebiet von Niedemhausen nach Königstein, so muss man zunächst mit einem Zug nach Höchst fahren, dort umsteigen und mit einem Zug in fast entgegengesetzter Richtung nach Niedernhausen weiterfahren. Rein geografisch legt man damit eine Strecke eines spitzen Dreiecks zurück: der Fahrgast fährt also einen ziemlich großen Umweg zu seinem Ziel und nähert sich dann bereits wieder dem Einstiegsbahnhof. Tariflich handelt es sich aber noch um eine Richtung.

Das Verfahren, das mittels des erfindungsgemäßen elektronischen Endgeräts durchführbar ist, kann dieses Problem lösen. Dazu werden an jeder Haltestelle Informationen über die "Fahrtrichtung" in den Code eingefügt. Beim Einstieg speichert das Endgerät also die Einstiegshaltestelle und beim Erreichen der nächsten Haltestelle kann nun zusätzlich die Fahrtrichtung festgelegt werden, die nun für die gesamte weitere Fahrt gilt. An jeder Haltestelle sendet das Fahrzeug zu jeder möglichen Einstiegshaltestelle Informationen, in welcher Richtung die Haltestelle aus Sicht der Einstiegshaltestelle durchfahren wird. Sobald ein Fahrgast nun eine Haltestelle erreicht, deren Richtungsinformation nicht mit der zu Fahrtbeginn ermittelten Richtung übereinstimmt, kann das auf dem elektronischen Ausweis gespeicherte Ticket abgeschlossen und gebucht werden und ein neues Ticket wird errechnet mit der aktuellen Haltestelle als neue Einstiegshaltestelle.

Codes können dabei in Abhängigkeit von allen denkbaren preisrelevanten Parametern gebildet werden, wie der zurückgelegten Fahrtstrecke, Datum und Uhrzeit um etwa Haupt- und Nebenzeiten zu unterscheiden, Art des Fahrzeugs um etwa unterschiedliche Preise für Busse, Bahnen und Taxis zu ermöglichen, befahrene Zonen, Fahrtrichtung, Wetter, Pünktlichkeit des Fahrzeugs um nur einige zu nennen.

Sinnvollerweise enthält der vom Fahrzeug gesendete Code auch einen oder mehrere weitere Informationen, wie zum Beispiel:
- eine Kennung des Betreibers um Sicherzustellen, daß die Wert- oder Geldeinheiten auch für den Betreiber Gültigkeit haben.
- Eine Kennung des Fahrzeugs, um Sicherzustellen, daß bei einem Fahrzeugwechsel die Zählerstände auseinander gehalten werden können und damit eine korrekte Abbuchung von Wert- oder Geldeinheiten gewährleistet wird.
- Ein Gruppenkennzeichen und/oder Preisangaben, um beispielsweise unterschiedliche Tarifinformationen für Kinder und Erwachsene zu senden und damit für Kinder niedrigere Preise zu ermöglichen.
- Ein Prüfmerkmal für Fahrscheinkontrollen, beispielsweise eine Prüfzahl oder eine Kombination von Symbolen. Dieses Prüfmerkmal kann beispielsweise nur im Falle einer Fahrscheinkontrolle im Code enthalten sein und dann auf dem Display angezeigt werden. Damit wird dem Kontrolleur eine einfache Sichtkontrolle der Fahrscheine ermöglicht. Die Anzeige des Prüfmerkmals kann in einer besonders sicheren Ausführung des Verfahrens auch daran gebunden werden, daß zuvor mindestens ein bis auf den enthaltenen Zählerstand identischer Code ohne Prüfmerkmal empfangen wurde. Damit sind Fahrgäste, die bewusst den Empfang der Codes unterdrücken, ebenfalls leicht erkennbar, da das Display dann kein Prüfmerkmal anzeigt.
- Eine Uhrzeit mit oder ohne Datum, um Missbrauch dadurch auszuschließen, daß nur solche Codes verarbeitet werden, die eine aktuelle Zeit haben. So kann vermieden werden, daß Codes aufgezeichnet und erneut gesendet werden können. Zum Vergleich der Uhrzeit kann die Verarbeitungseinheit eine Zeitmessung vornehmen, die sich über die im Code enthaltenen Zeitangaben justiert.
- Statt oder zusätzlich zu einer Uhrzeit kann auch eine laufende Nummer enthalten sein, die ebenfalls ermöglicht, bereits empfangene Codes mit niedrigeren Nummern von der Verarbeitung auszuschließen.
- Werteinheiten, mit denen ein Speicher aufgebucht werden kann.

Das Verfahren ist dann besonders einfach umzusetzen, wenn die Aussendung der Codes zu festgelegten Zeiten, zum Beispiel alle 10 Sekunden, erfolgt. Dadurch können die Empfänger besonders energiesparend ausgelegt werden, da sie in der Zwischenzeit abgeschaltet werden können.

Ein besonderer Aspekt betrifft die Aussendung der Datentelegramme die von bestimmten Ereignissen ausgelöst wird.

Gemäß dem hier beschriebenen Verfahren finden die Ereignisse in einem festen zeitlichen Abstand statt. Dadurch wird sichergestellt, daß das erfindungsgemäße Endgerät regelmäßig Datentelegramme empfängt.

Gemäß einer Ausgestaltung des Verfahrens finden die Ereignisse nach einer durch das Transportmittel zurückgelegten Strecke statt. Somit läßt sich die Benutzung des Transportmittels mit einer vorgebbaren örtlichen Genauigkeit erfassen.

Weiterhin ist es möglich, daß die Ereignisse stattfinden, wenn sich das Transportmittel im Bereich einer Haltestelle befindet. Somit läßt sich die Aussendung von Datentelegrammen auf ein Minimum reduzieren, da die Haltestellen diskrete Streckenabschnitte definieren, die eine kleinstmögliche Nutzungseinheit darstellen. Wird kein weiteres Datentelegramm empfangen, so ist davon auszugehen, daß der Benutzer das Transportmittel an der dem letzten empfangenen Datentelegramm zugehörigen Haltestelle verlassen hat. Zur genaueren Unterteilung kann vorgesehen sein, daß ein Datentelegramm bei Einfahrt in eine Haltestelle und ein Datentelegramm bei Ausfahrt aus der Haltestelle gesendet wird. Dadurch wird sichergestellt, daß das Endgerät des Nutzers an jeder Haltestelle mindestens ein Datentelegramm empfängt.

Gemäß einer weiteren Ausgestaltungsform finden die Ereignisse nach einem Zonen- und/oder Wabenwechsel statt. Ein solcher Wechsel kann für die Tarifermittlung und somit für die Gültigkeit des Tickets von Bedeutung sein, weshalb sich bei diesem Ereignis die Aussendung eines Datentelegramms anbietet.

Selbstverständlich ist es möglich, daß mehrere dieser Ereignisse die Aussendung eines Datentelegramms auslösen. Nicht nur in diesem Fall bietet es sich an, die Art des auslösenden Ereignisses im Datentelegramm zu vermerken.

In einer vorteilhaften Ausgestaltung der vorliegenden Erfindung generiert das Endgerät aus den empfangenen Datentelegrammen Datensätze über den Fahrtanfang und/oder das Fahrtende und speichert diese. So kann zur Abrechnung oder Analyse des Nutzungsverhaltens festgestellt werden, wann und wo ein Nutzer in ein Transportmittel zugestiegen ist oder dieses verlassen hat. Anhand dieser Daten lassen sich auch durch Umsteigen unterbrochene Fahrten als zusammengehörig erkennen.

Grundsätzlich können die Tarifinformationen auch auf der Speichereinheit des elektronischen Ausweises hinterlegt sein.

Das Verfahren zur automatisierten Erfassung der Benutzung kostenpflichtiger Transportmittel und zur Abrechnung des Fahrpreises beruht darauf, daß der Benutzer sein Endgerät während der gesamten Fahrtdauer eingeschaltet hat. Um zu verhindern, daß das Endgerät erst dann eingeschaltet wird, wenn eine Fahrkartenkontrolle durchgeführt wird, kann von dem im Transportmittel angeordneten Sender ein Datentelegramm ausgesendet werden, das das Endgerät in einen Kontrollmodus versetzt. Dieser Modus wird vom Endgerät angezeigt und kann nicht angenommen werden, wenn das Endgerät nach der Aussendung des entsprechenden Datentelegramms eingeschaltet wurde.

Gemäß einer vorteilhaften Ausgestaltung des Verfahrens kann das Endgerät durch den Kunden bewußt ausgeschaltet werden. So kann zum Beispiel ein Kunde mehrere Endgeräte gleichzeitig mitführen, ohne daß auf allen eine Abrechnung erfolgt, wenn diese ausgeschaltet sind. Dies kann zum Beispiel der Fall sein, wenn ein Vater die Endgeräte seiner Kinder mitführt, obwohl die Kinder nicht mit dem Vater unterwegs sind.

Selbstverständlich können auch andere Kontrollmechanismen, die durch die Aussendung eines speziellen Datentelegramms initiiert werden, verwendet werden.

Denkbare Empfänger bringen ein weiteres praktisches Problem mit sich: Sendet das Fahrzeug keine Information, kann dies vom Empfänger zunächst nicht erkannt werden, da die Empfänger dann willkürliche Informationen erkennen (Rauschen des Empfängers). Diese Eigenschaft zieht üblicherweise einen hohen Energiebedarf des Empfängers nach sich, da eine klassische Trägererkennung bei diesen Empfängern nicht möglich ist und die Empfänger deshalb kontinuierlich eingeschaltet bleiben müssen. Um weiterhin den Energiebedarf im Endgerät zu reduzieren, kann die Aussendung des Codes daher sehr redundant erfolgen. Werden die Codes nach einem festen Schema codiert, z.B. jedes Bit wird n-mal wiederholt, so kann ein Empfänger im Bruchteil einer Sekunde erkennen, ob das Signal vom Sender stammt, oder ob es sich um Rauschen handelt, wenn sich nämlich das Rausch-Signal schneller als nach "n" gleichen Elementen verändert. Dann kann der Empfänger sofort abgeschaltet werden und erst nach einer festgelegten Zeit (Ruhezeit) wieder eingeschaltet werden. Dieses Verfahren ist dann besonders effektiv, wenn die Dauer der Übermittlung des Codes länger ist als die Ruhezeit des Empfängers.

Um das Verfahren besonders robust auszugestalten, kann ein empfangener Code erst dann als gültig ausgewertet werden, wenn bestimmte Merkmale des Codes (z.B. die aktuelle Haltestelle) über einen längeren Streckenabschnitt mehrmals empfangen wurde. Damit werden mögliche Störungen durch Funksignale von entgegenkommenden Fahrzeugen vermieden.

In einer Ausführung des Verfahrens, werden die Wert- oder Geldeinheiten nur abgebucht, wenn die Veränderung des Zählerstands einen festgelegten Schwellwert überschreitet. Damit kann sichergestellt werden, daß nicht etwa Codes empfangen werden, die von einem vorbeifahrenden Fahrzeug stammen, welches der Fahrgast gar nicht benutzt. In diesem Falle empfängt er zwar einen oder mehrere Codes, die enthaltenen Zähler haben sich aber aufgrund der geringen zurückgelegten Entfernung des Fahrzeugs kaum verändert und können somit ignoriert werden.

Besonders manipulationssicher ist das Verfahren, wenn der Code mit einem aus dem Stand der Technik bekanntem asymmetrischen Verschlüsselungsverfahren verschlüsselt wird, wobei der private Schlüssel zur Verschlüsselung des Codes und der öffentliche Schlüssel zum Entschlüsseln des Codes genutzt wird. Damit wird sichergestellt, daß nur autorisierte Stellen die preisrelevanten Codes bilden. Entsprechende Sicherheit kann auch unter Verwendung von symmetrischen Verschlüsselungsverfahren erzeugt werden. In diesem Falle werden die Schlüssel auf dem erfindungsgemäßen Endgerät geeignet sicher abgelegt.

Für Abonnenten ist weiterhin eine besonders vorteilhafte Ausführung des Verfahrens denkbar, bei dem vor einem Abbuchen von Geld-/oder Werteinheiten geprüft wird, ob die zurückgelegte Strecke in einer im erfindungsgemäßen Endgerät enthalten Liste aufgeführt ist und sofern Sie als im Abonnement enthalten erkennbar ist, nicht berechnet wird. So können Vielfahrer bestimmte Strecken pauschal, etwa monatlich bezahlen und nur noch die Gelegenheits-Fahrten über die im Endgerät enthaltenen Geld- oder Werteinheiten abrechnen.

Insgesamt umfaßt das Verfahren eine große Vielzahl von einzelnen Detailverfahren. Das Basisverfahren geht davon aus, daß ein fahrzeugeigener Sender gemäß einer vorgegebenen Regel Signale aussendet. Das nutzerseitiges erfindungsgemäßes Endgerät enthält die Empfangseinheit, die Speichereinheit, die Verarbeitungseinheit und das Display. Das Endgerät ist möglichst klein und robust gebaut und kann von jedem Nutzer mitgeführt werden. Befindet sich ein Nutzer innerhalb des Fahrzeugs und damit im Bereich des fahrzeugseitigen Senders, empfängt das Endgerät die vom Fahrzeugsender gesandten Signale. Auf der Speichereinheit des Endgerätes ein einen Geldwert oder Kartenpunkte oder dergleichen repräsentierender Wert gespeichert. Dieser kann als Guthaben auf dem Display angezeigt werden. In Abhängigkeit von dem jeweiligen Verfahren und der gesamten Codes kann nunmehr von dem gespeicherten Wert tarifrelevant abgebucht werden. Das Basissystem könnte somit im einfachsten theoretischen Fall so funktionieren, daß das Fahrzeug an jeder Haltestelle ein Signal abgibt und das Endgerät pro empfangenen Signal einen festen Wert abbucht.

In dem Endgerät können darüber hinaus Spezialinformationen hinterlegt sein, wie beispielsweise Sondertarifwerte für Kinder, Senioren und dergleichen, Transportbereichangaben, Streckenangaben oder beispielsweise Zeitangaben wie Monatskarten und dergleichen.

Grundsätzlich können Tarifinformationen vollständig auf dem Speicher des Endgerätes gespeichert sein und berücksichtigt werden, oder, für den Fall daß dies zuviele Informationen umfaßt, auch vom Sender im Code übermittelt werden.

Um auf einfachste Weise flexibel zu sein, kann das erfindungsgemäße Endgerät über eine zusätzliche Schnittstelle, beispielsweise eine Infrarotschnittstelle verfügen und spezielle Informationen oder Modi abrufen. So kann beispielsweise ein einfaches Senderfeld im Fahrzeug verwendet werden, um einen Mehrpersonenmodus im Endgerät zu aktivieren, beispielsweise doppelte, dreifache oder mehrfache Abbuchungen oder dergleichen. Hier genügt ein einfaches Anhalten an ein entsprechend gekennzeichnetes Senderdisplay, um per Infrarot die Informationen zu erlangen.

Die Tarifinformationen können senderseitig so aufbereitet sein, daß für die aktuelle Haltestelle jeweils der zu entrichtende Fahrpreis in Bezug auf eine beliebige Einstiegshaltestelle, Einstiegszone oder dergleichen festgelegt und übermittelt wird. Das jeweilige Endgerät kann dann auf einfache Weise den gültigen Tarif entnehmen und abbuchen.

Zum Aufladen wird das Nutzerendgerät an sogenannten Ladeterminals geführt. Beispielsweise kann über die Infrarotschnittstelle eine Identifikation erfolgen, aber auch über andere Schnittstellen berührungslos oder kontaktierend. Eine bar oder per Karte geleistete Einzahlung kann dann ebenfalls über Infrarot, Funk, USB oder dergleichen auf das Endgerät als Guthaben übermittelt werden. Dabei können Identifikationsverfahren und kryptografische Verfahren eingesetzt werden.

Die Ladeterminals sind vorzugsweise online mit Ladeservern verbunden, so daß die Ladeterminals selbst keinerlei Informationen bereithalten, die beliebige Dritte beispielsweise ermitteln könnten.

Jede dieser genannten Einzelmerkmale sind für sich unabhängig von den anderen schutzfähig.

Besonders flexibel wird das erfindungsgemäße Endgerät, wenn es wie ausgeführt zusätzlich mit einem Infrarot-Empfänger ausgestattet ist. Über diesen Empfänger können sehr leicht spezielle Codes an das Endgerät gesendet werden, um Einstellungen im Speicher zu verändern. Beispielsweise ist es möglich, im Fahrzeug mehrere Felder mit jeweils einer einfachen Infrarot-Sendereinheit vorzusehen, die kennzeichnet, mit wie viel Personen der Fahrgast gemeinsam reist. Ein Infrarot-Sender sendet kontinuierlich eine "1", ein zweiter Infrarot-Sender sendet kontinuierlich eine "2" usw. Durch einfaches "zeigen" auf ein Personen-Symbol kann der Fahrgast nun seinem Endgerät mitteilen, daß die nachfolgende Fahrt für die entsprechende Anzahl Personen abgebucht werden soll. Statt eines Infrarot-Empfängers sind auch andere einfache Empfangsvorrichtungen denkbar z.B. ein Kontakt, eine weiter Funkschnittstelle, Ultraschallsensoren, ein Fotosensor u.a..

Für den Einsatz in Taxis oder in anderen Fahrzeugen, bei denen der Fahrpreis sehr genau dem einzelnen Betreiber zugeordnet werden muß, kann vorgesehen sein, daß das Endgerät unmittelbar mit dem Abbuchen auch jeweils ausgelesen wird und die ausgelesenen Informationen an ein Abrechnungssystem übergeben werden.

Es ist vorgesehen, daß die im Endgerät gespeicherten Daten in zeitlichen Abständen gesammelt an eine zentrale Rechnereinheit übertragen werden. Dies kann beispielsweise erfolgen, wenn der Nutzer eine bestimmte Zone erreicht, beispielsweise den Zugang zu einer Haltestelle, oder wenn der Nutzer zu Abrechnungszwecken eine Verbindung zwischen seinem Endgerät und einer Rechnereinheit des Transportdienstleisters herstellt.

Generell ist das Auslesen der in den Speichern vorgehaltenen Transaktionsdaten auf verschiedenen Wegen möglich: Beim Wiederaufladen der Endgeräte mit neuen Werteinheiten oder über das Internet oder aber auch regelmäßig automatisch während der Fahrt an einen Datenspeicher im Fahrzeug.

Wirtschaftlich ist das Verfahren insbesondere dann, wenn die abzubuchenden Werteinheiten vom Fahrgast gegen Zahlung entsprechender Beträge auch wieder aufgeladen werden können. Das erfindungsgemäße Verfahren sieht dabei vor, daß ein Hintergrundsystem die Zahlung erfaßt und dann an das Endgerät neue Werteinheiten übermittelt. Der Zahlvorgang des Fahrgastes kann bar an einer Verkaufstelle oder bargeldlos über Automaten, ein Call-Center oder das Internet erfolgen. Die für das Endgerät erzeugten Werteinheiten können beispielsweise mit Hilfe von Ladeterminals an das Endgerät übermittelt werden. Denkbar ist auch, die ausgesendeten Codes des Fahrzeugs mit den für die Endgeräte vorgesehenen Werteinheiten zu versehen. Dazu ist es nötig, daß die Werteinheiten jeweils für ein Endgerät Gültigkeit besitzen und in jedem Fahrzeug ausgesendet werden.

In vorteilhafter Weise zeigt das erfindungsgemäße Endgerät den aktuellen Ticketstatus an. Dadurch kann sowohl der Nutzer als auch ein Kontrolleur durch einfache Sichtung des Endgerätes feststellen, ob es sich um einen gültigen Fahrausweis handelt und der Nutzer über die Berechtigung zur Benutzung des Transportmittels verfügt.

Mit der Übergabe des Endgerätes an den Nutzer wird dieses initialisiert, beispielsweise durch Aufspielen von Ticketinformationen. Besteigt der Nutzer mit eingeschaltetem Endgerät ein Transportmittel, so empfängt das Endgerät ein erstes Datentelegramm, aus dem ein Datensatz über den Fahrtanfang generiert und gespeichert wird. Dieser Datensatz enthält neben dem Datum und der Uhrzeit auch die Identifikation des Fahrzeugs, so daß sowohl der Zeitpunkt als auch die in Anspruch genommene Transportleistung eindeutig identifiziert werden können. Während der Fahrt empfängt das Endgerät weitere Datentelegramme, bis daß der Nutzer den vom im Transportmittel angeordneten Sender abgedeckten Bereich verläßt und keine weiteren Datentelegramme mehr empfangen werden. Aus dem letzten empfangenen Datentelegramm generiert das Endgerät analog zu dem Vorgang bei Fahrtanfang einen Datensatz über das Fahrtende, der Datum, Uhrzeit sowie die Fahrzeugidentifikation enthält. Während der Fahrtdauer zeigt das Endgerät an, ob das auf dem elektronischen Ausweis gespeicherte Ticket gültig ist. Sobald das Endgerät bei nächster Gelegenheit in kommunikationstechnischem Kontakt mit einer Rechnereinheit des Transportdienstleisters steht, werden die gespeicherten Daten an diese Rechnereinheit übertragen, beispielsweise um eine Analyse des Nutzungsverhaltens durchzuführen, zu kontrollieren und das Vertrauen des Kunden in das System zu verbessern.

Es sollte klar sein, daß das erfindungsgemäße elektronische Endgerät modifiziert werden kann, ohne den Schutzbereich der vorliegenden Erfindung zu verlassen, der durch die beiliegenden Ansprüche definiert ist.

## Patentansprüche

1. Elektronisches Endgerät mit integriertem elektronischen Ausweis, wobei der elektronische Ausweis zumindest eine Speichereinheit, eine Empfangseinheit und eine Verarbeitungseinheit aufweist, die derart eingerichtet sind, daß eine Abrechnung einer in Anspruch genommenen Dienstleistung basierend auf im Sinne einer Kommunikation übermittelten Datentelegrammen durchführbar ist, wobei die Datentelegramme von der Empfangseinheit empfangbar und von der Verarbeitungseinheit verarbeitbar sind,
**dadurch gekennzeichnet, daß**
die Kommunikation ausschließlich unidirektional durch Übermittlung der Datentelegramme an das Endgerät erfolgt.

2. Elektronisches Endgerät nach Anspruch 1, das eine Informationsausgabeeinheit umfaßt.

3. Elektronisches Endgerät nach einem der vorhergehenden Ansprüche, bei dem es sich um ein Mobiltelefon und/oder einen Handheld handelt.

4. Elektronisches Endgerät nach einem der vorhergehenden Ansprüche, wobei die Speichereinheit derart eingerichtet ist, daß auf dieser ein vorbezahltes Guthaben speicherbar ist.

5. Elektronisches Endgerät nach Anspruch 4, wobei die Verarbeitungseinheit derart eingerichtet ist, daß ein auf der Speichereinheit gespeichertes Guthaben in Abhängigkeit der übermittelten Datentelegramme reduzierbar ist.

6. Elektronisches Endgerät nach einem der vorhergehenden Ansprüche, wobei der Speicher derart eingerichtet ist, daß auf diesem zeitlich und/oder räumlich begrenzte Gültigkeitsinformationen speicherbar sind.

7. Elektronisches Endgerät nach einem der vorhergehenden Ansprüche, wobei eine Sendeeinheit vorgesehen ist, mit der Daten an eine Zentralrechnereinheit übermittelbar sind.

8. Elektronisches Endgerät nach einem der vorhergehenden Ansprüche, wobei die Verarbeitungseinheit derart eingerichtet ist, daß die empfangenen Datentelegramme in verschiedenen Modi verarbeitbar sind.

9. Elektronisches Endgerät nach Anspruch 8, das derart eingerichtet ist, daß ein aktiver Modus mittels einer Informationsausgabeeinheit anzeigbar ist.

10. Elektronisches Endgerät nach einem der vorhergehenden Ansprüche, wobei die Verarbeitungseinheit derart eingerichtet, daß sie aus den empfangenen Datentelegrammen Datensätze über den Fahrtanfang und/oder das Fahrtende generiert und diese speichert.

11. Elektronisches Endgerät nach einem der vorhergehenden Ansprüche, das eine zusätzliche Schnittstelle aufweist.
